# EUROPÄISCHE PATENTANMELDUNG

(11) **EP 2 820 943 A2**
(43) Veröffentlichungstag der Anmeldung: **07.01.2015**
(21) Anmeldenummer: 14168929.9
(22) Anmeldetag: 20.05.2014
(51) Int. Cl.: A01K 7/02, A01K 1/035

(54) **Kleintiertränke**

(30) Priorität: 02.07.2013 DE 202013102888 U
(71) Anmelder: Albert Kerbl GmbH, 84428 Buchbach (DE)
(72) Erfinder: Kerbl, Albert, 84428 Buchbach (DE)
(74) Vertreter: Kalkoff & Partner

(57) **Zusammenfassung**

Die Erfindung betrifft eine Kleintiertränke mit einem eine Öffnung (25) aufweisenden Flüssigkeitsbehälter (2) und einer Tränkeschale (3) mit einem Aufnahmeabschnitt (5) zur öffnungsseitigen Anordnung des Flüssigkeitsbehälters (2) an der Tränkeschale (3) sowie einem mit dem Aufnahmeabschnitt (5) verbundenen, für Kleintiere zugänglichen Entnahmebereich (4). Um eine Kleintiertränke bereit zu stellen, welche zuverlässig eine Frostfreiheit auch bei Temperaturen deutlich unter dem Gefrierpunkt aufweist, ist vorgesehen, dass im Bodenbereich der Tränkeschale (3) ein Heizmittel (6) zum Beheizen der Tränkeschale (3) angeordnet ist.

## Beschreibung

Die Erfindung betrifft eine Kleintiertränke mit einem eine Öffnung aufweisenden Flüssigkeitsbehälter und einer Tränkeschale, die einen Aufnahmeabschnitt zur öffnungsseitigen Anordnung des Flüssigkeitsbehälters an der Tränkeschale sowie einen mit dem Aufnahmeabschnitt verbundenen, für Kleintiere zugänglichen Entnahmebereich aufweist.

Kleintiertränken der eingangs genannten Art sind in vielfältigen Ausgestaltungen aus dem Stand der Technik bekannt. Sie werden bspw. bei Kaninchen- oder Hasenställen dazu verwendet, für die in den Ställen angeordneten Tiere, eine dauerhafte Versorgung mit Trinkwasser bereit zu stellen. Der Flüssigkeitsbehälter dient dabei als Trinkwasserreservoir, welcher aufgrund seiner Anordnung an der Tränkeschale selbstständig für ein gleichbleibendes Wasserniveau in der Tränkeschale sorgt. Der Flüssigkeitsbehälter ist dabei mit seinem öffnungsseitigen Ende derart an der Tränkeschale angeordnet, dass das Trinkwasser im Fall eines Absinkens des Flüssigkeitsspiegels in der Tränkeschale selbsttätig aus der Öffnung austritt und so für ein gleichbleibendes Flüssigkeitsniveau sorgt. Im demontierten Zustand dient die Öffnung auch zum Befüllen des Flüssigkeitsbehälters. Neben dem Aufnahmeabschnitt, welcher zur lagesicheren Anordnung des Flüssigkeitsbehälters an der Tränkeschale dient, weist die Tränkeschale ferner einen Entnahmebereich auf, der es den Tieren ermöglicht, die in der Tränkeschale angeordnete Flüssigkeit komfortabel aufzunehmen.

Bekannte Kleintiertränken der eingangs genannten Art weisen jedoch den Nachteil auf, dass sie bei der Anordnung von im Freien platzierten Kaninchenställen aufgrund der sich im Winter einstellenden Temperaturen unter dem Gefrierpunkt dazu neigen, einzufrieren, sodass dann für die Kleintiere nicht mehr die Möglichkeit zur Flüssigkeitsaufnahme besteht. Aufgrund der exponierten Anordnung der Kleintiertränke kommt es dabei selbst dann zu einem Einfrieren der Flüssigkeit, wenn die Ställe an geschützter Stelle im Freien aufgestellt werden. Zur Vermeidung eines Einfrierens der Kleintiertränken werden bereits den Behälter isolierende Hauben eingesetzt, welche jedoch nur einen unzureichenden Schutz bieten und insbesondere bei einer länger andauernden Frostperiode ein Einfrieren nicht verhindern können.

Der Erfindung liegt die Aufgabe zugrunde, eine Kleintiertränke bereit zu stellen, welche zuverlässig eine Frostfreiheit auch bei Temperaturen deutlich unter dem Gefrierpunkt aufweist.

Die Erfindung löst die Aufgabe durch eine Kleintiertränke mit den Merkmalen des Anspruchs 1. Vorteilhafte Weiterbildungen der Erfindung sind in den abhängigen Ansprüchen angegebenen.

Kennzeichnend für die erfindungsgemäße Kleintiertränke ist, dass im Bodenbereich der Tränkeschale ein Heizmittel zum Beheizen der Tränkeschale angeordnet ist. Die Verwendung eines Heizmittels im Bodenbereich der Tränke gewährleistet auch bei deutlich unter dem Gefrierpunkt liegenden Temperaturen eine Frostfreiheit der in der Tränkeschale angeordneten Flüssigkeit. Über die in der Regel große Bodenfläche der Tränkeschale kann dabei in zuverlässiger Weise eine Wärmeübertragung in die Flüssigkeit erreicht werden, welche ausreichend ist, um die Frostfreiheit zu garantieren. Das Heizmittel ist darüber hinaus dazu geeignet, um auch in dem das Flüssigkeitsreservoir für die Tränkeschale bereitstellenden Flüssigkeitsbehälter ein Einfrieren der Flüssigkeit zu verhindern. Die Frostfreiheit in dem Flüssigkeitsbehälter kann dabei besonders zuverlässig dadurch gewährleistet werden, dass die zum Befüllen des Flüssigkeitsbehälters sowie zum Befüllen der Tränkeschale vorgesehene Öffnung des Flüssigkeitsbehälters eine große Öffnungsweite aufweist, um so die Wärmeübertragung in das Flascheninnere zu begünstigen. Besonders vorteilhafter Weise entspricht die Öffnungsweite im Wesentlichen dem Innendurchmesser des Flüssigkeitsbehälters im Bereich der Öffnung und ist nicht durch einen durchmesserreduzierenden Deckel verschlossen.

Die erfindungsgemäße Kleintiertränke zeichnet sich somit neben ihrem einfachen Aufbau durch ihre hohe Frostsicherheit aus, die auch bei Temperaturen von - 20°C bis -25°C, die deutlich unter dem Gefrierpunkt liegen, eine dauerhafte und zuverlässige Versorgung von Kleintieren mit Trinkwasser ermöglicht.

Die Ausgestaltung des Heizmittels sowie dessen Anordnung im Bodenbereich der Tränkeschale kann grundsätzlich in beliebiger Weise erfolgen. Nach einer besonders vorteilhaften Ausgestaltung der Erfindung ist jedoch vorgesehen, dass das Heizmittel, welches besonders vorteilhafter Weise durch ein elektrisches Heizelement gebildet ist, an einer Unterseite der Tränkeschale angeordnet ist. Die Anordnung des Heizmittels an der Unterseite der Tränkeschale zeichnet sich dabei dadurch aus, dass die in der Regel größte ebene Fläche zur Übertragung der von dem Heizmittel aufgebrachten Heizenergie in die Tränkeschale verwendet werden kann. Die Ebenheit der Fläche ermöglicht es dabei, besonders einfach ausgebildete Heizmittel zu verwenden. Auf teure, an eine unebene Form angepasste Heizelemente oder hochpreisige, flexible Heizfolien kann somit verzichtet werden. Insbesondere erlaubt diese Ausgestaltung der Erfindung die Verwendung solcher elektrischen Heizelemente, die sich besonders einfach und kostengünstig herstellen lassen. Beispielsweise können anstelle von teuren Heizfolien starre Heizplatten verwendet werden, welche über eine einfache externe Stromversorgung die geforderte Wärmezufuhr aufbringen.

Zur Verbesserung der Funktionsweise der erfindungsgemäßen Kleintiertränke kann nach einer weiteren Ausgestaltung der Erfindung vorgesehen sein, dass das Heizmittel an seiner dem Entnahmebereich und dem Aufnahmeabschnitt abgewandten Seite durch ein Isolationselement bedeckt ist. Durch die Verwendung eines derartigen Isolationselements wird eine Wärmeabstrahlung in eine dem Aufnahmeabschnitt und dem Entnahmebereich abgewandte Richtung minimiert. Durch die Verwendung eines Isolationselements kann die Heizenergie zur Gewährleistung einer Frostfreiheit reduziert, bzw. der Temperaturbereich, in dem Frostfreiheit gewährleistet wird, ausgedehnt werden. Die Ausgestaltung des Isolationselements ist dabei grundsätzlich frei wählbar, wobei dieses bspw. durch eine Styroporschicht gebildet sein kann.

Die lagesichere Anordnung des Flüssigkeitsbehälters im Aufnahmeabschnitt der Tränkeschale kann grundsätzlich in beliebiger Weise erfolgen. Nach einer besonders vorteilhaften Ausgestaltung der Erfindung ist jedoch vorgesehen, dass die Tränkeschale ein Befestigungselement zur lagesicheren Anordnung eines Halters des Flüssigkeitsbehälters an der Tränkeschale, insbesondere einen im Bereich zwischen dem Aufnahmeabschnitt und dem Entnahmebereich angeordneten Haltesteg aufweist. Gemäß dieser Ausgestaltung der Erfindung ist vorgesehen, dass die Tränkeschale neben dem Entnahmebereich und dem Aufnahmeabschnitt ein Befestigungselement aufweist, welches dazu dient, einen Halter aufzunehmen, welcher mit dem Flüssigkeitsbehälter verbunden ist. Durch diese Ausgestaltung der Erfindung wird eine besonders zuverlässige Lagesicherung des Flüssigkeitsbehälters an der Tränkeschale gewährleistet. Insbesondere die Anordnung eines Halters des Flüssigkeitsbehälters an einem im Bereich zwischen dem Aufnahmeabschnitt und dem Entnahmebereich angeordneten Haltesteg erlaubt es, die Kleintiertränke derart an einem Kleintiergehege bzw. dem Gitter eines Kleintierstalls anzubringen, dass die Flasche mit dem Aufnahmeabschnitt außenseitig an dem Gitter und der Entnahmebereich gleichzeitig im Stallinneren angeordnet ist. Der Aufnahmeabschnitt und der Entnahmebereich sind dabei grundsätzlich derart miteinander verbunden, dass im Aufnahmeabschnitt aus dem Flüssigkeitsbehälter austretende Flüssigkeit in den Entnahmebereich gelangt und dort üblicherweise das Flüssigkeitsniveau aufweist, das im Aufnahmeabschnitt vorliegt.

Die Anordnung sowie die Ausgestaltung des Halters kann dabei in beliebiger Weise erfolgen. Nach einer besonders vorteilhaften Ausgestaltung der Erfindung ist jedoch vorgesehen, dass der Halter durch eine Öffnung des Haltestegs gesteckt und im Bereich der Unterseite befestigt ist. Besonders bevorzugt ist der Halter dabei durch einen flachen Metallkörper gebildet, der im Bereich der Unterseite umgebogen ist. Gemäß dieser Ausgestaltung der Erfindung ist der Halter zur lagesicheren Anordnung des Flüssigkeitsbehälters an der Tränkeschale dauerhaft mit der Tränkeschale verbunden. Die dauerhafte Verbindung wird dabei dadurch realisiert, dass sich der Halter mit einem Endbereich durch eine Öffnung des Haltestegs erstreckt und im Bereich der Unterseite mit der Tränkeschale verbunden ist. Im Falle der Ausgestaltung des Halters durch einen flachen Metallkörper ist dieser im Bereich der Unterseite umgebogen, sodass sich eine formschlüssige Verbindung zwischen dem Halter und der Tränkeschale ergibt, die über die ortsfeste Anordnung des Halters auch eine lagesichere Anordnung des Flüssigkeitsbehälters an dem Halter gewährleistet.

Nach einer weiteren Ausgestaltung der Erfindung ist vorgesehen, dass das Befestigungselement, insbesondere der Haltesteg, ein thermisch leitend mit dem Heizmittel verbundenes Wärmeelement aufweist. Gemäß dieser Ausgestaltung der Erfindung ist vorgesehen, dass ergänzend zu dem erfindungsgemäß vorgesehenen Heizmittel ein weiteres Wärmeelement an der Tränkeschale angeordnet ist, welches die Wärmeübertragung in die Tränkeschale verbessert. Das Wärmelement ist dabei im Bereich des Befestigungselements, insbesondere an dem Haltesteg angeordnet und aus einem Material vorzugsweise einem Metall gebildet, welches eine gute Wärmeleitung aufweist. Aufgrund der bestehenden thermisch leitenden Verbindung des Wärmeelements mit dem Heizmittel, welche bspw. durch eine flächige Anlage des Wärmeelements an dem Heizmittel erreicht wird, kann dann eine Wärmeübertragung in die Tränkeschale verbessert werden.

Nach einer besonders vorteilhaften Ausgestaltung der Erfindung kann dabei das Wärmeelement bspw. durch einen Abschnitt des Halters gebildet sein, insbesondere wenn dieser aus einem flachen Metallkörper gebildet ist, der im Bereich der Unterseite umgebogen ist. Eine Wärmeübertragung kann für diesen Fall der Ausgestaltung über den umgebogenen Bereich des Metallkörpers erreicht werden, sodass dann über diesen Bereich eine Erwärmung des Halters erreicht wird, welche insgesamt eine Wärmeübertragung in die Tränkeschale verbessert.

Die Ausgestaltung der Kleintiertränke derart, dass sich diese an einem Gitter eines Kaninchenstalls befestigen lässt sowie die Art der Befestigung des Flüssigkeitsbehälters an dem Halter ist grundsätzlich frei wählbar. Nach einer besonders vorteilhaften Ausgestaltung der Erfindung ist jedoch vorgesehen, dass der Halter Befestigungsmittel, insbesondere Laschen zur Befestigung der Kleintiertränke an einem Gitter und/oder ein Arretierungselement zur Befestigung des Flüssigkeitsbehälters an dem Halter aufweist. Gemäß dieser Ausgestaltung der Erfindung sind an dem Halter Befestigungsmittel angeordnet, welche es ermöglichen, die Kleintiertränke lagesicher an dem Stall bzw. dem Gitter eines Stalls anzuordnen. Im Falle der vorteilhafter Weise vorgesehenen Ausgestaltung der Befestigungsmittel als Laschen, kann die Kleintiertränke durch einfaches Einhängen der Laschen in die Gitterstäbe an dem Stall bzw. dem Gehege befestigt werden. Die Ausgestaltung der Laschen an dem Halter, welche auch einstückig aus dem Halter gebildet sein können, erlaubt es, auf ergänzende Befestigungsmittel zur Anordnung der Kleintiertränke zu verzichten.

Zur Befestigung des Flüssigkeitsbehälters an dem Halter dient nach einer vorteilhaften Weiterbildung das Arretierungselement, welches ebenfalls grundsätzlich in beliebiger Weise ausgeführt sein kann. Bspw. kann das Arretierungselement als den Flüssigkeitsbehälter teilweise umschließender Ring ausgebildet sein, wodurch eine einfache Anordnung und Entfernung des Flüssigkeitsbehälters an dem Halter möglich ist. Somit lässt sich der Flüssigkeitsbehälter in einfacher Weise befüllen und im befüllten Zustand an der Tränkeschale anordnen.

Der Flüssigkeitsbehälter ist in seiner einfachsten Form als topfartiger Behälter geformt, welcher über eine Öffnung eine Befüllung sowie Entnahme gewährleistet. Zur Steigerung der Frostsicherheit kann nach einer Weiterbildung der Erfindung vorgesehen sein, dass die Mantelfläche des Flüssigkeitsbehälters und/oder die der Öffnung gegenüberliegende Stirnseite durch eine Isolierung bedeckt ist.

Diese Isolierung reduziert den Wärmeverlust über die Mantelfläche des Flüssigkeitsbehälters und erhöht somit die Frostsicherheit in ergänzender Weise. Die Isolierung kann dabei die Mantelfläche partiell bedecken oder aber gemäß einer besonders vorteilhaften Weiterbildung der Erfindung die Mantelfläche des Flüssigkeitsbehälters sowie den Bodenbereich, welcher der Öffnung gegenüber liegt, vollständig überdecken. Besonders vorteilhafter Weise ist die Isolierung dabei als auf den Flüssigkeitsbehälter aufschiebbarer Hohlkörper gebildet.

Wie bereits das Isolationselement so kann auch die Isolierung aus einem grundsätzlich beliebigen, den Wärmeübergang reduzierenden Material gebildet sein. Nach einer besonders vorteilhaften Ausgestaltung der Erfindung ist dabei jedoch vorgesehen, dass die Dicke der Isolierung ausgehend von der Öffnung des Flüssigkeitsbehälters in Richtung der gegenüberliegenden Stirnseite zunimmt. Gemäß dieser Ausgestaltung der Erfindung erhöht sich die Dicke der Isolierung ausgehend von der Öffnung in Richtung der geschlossenen Stirnseite, welche im montierten Zustand des Flüssigkeitsbehälters an der Tränkeschale den größten Abstand von dem Heizelement aufweist.

Durch diese Ausgestaltung der Erfindung kann über die gesamte Längserstreckung des Flüssigkeitsbehälters eine Frostfreiheit innerhalb des Behälters gewährleistet werden. Gleichzeitig lässt sich der Flüssigkeitsbehälter und damit die Kleintiertränke somit besonders kostengünstig herstellen, da der Umfang an kostenintensiven Isolationsmaterialien gering gehalten werden kann.

Nach einer weiteren Ausgestaltung der Erfindung ist vorgesehen, dass der Aufnahmeabschnitt des Flüssigkeitsbehälters derart ausgebildet ist, dass der Flüssigkeitsbehälter in den Aufnahmeabschnitt einschraubbar ist. Gemäß dieser Ausgestaltung der Erfindung wird über eine Schraubverbindung eine besondere Lagesicherung des Flüssigkeitsbehälters an der Tränkeschale gewährleistet, wodurch in besonders zuverlässiger Weise ein gleichbleibendes Flüssigkeitsniveau sowie ein Nachfließen der Flüssigkeit im Falle einer Entleerung des Entnahmebereichs gewährleistet wird.

Ein Ausführungsbeispiel der Erfindung wird nachstehend mit Bezug auf die Zeichnung erläutert. In den Zeichnungen zeigen:
- Fig. 1: eine Schnittansicht einer Kleintiertränke;
- Fig. 2: eine perspektivische Ansicht einer Explosionsdarstellung der Kleintier tränke von Figur 1 und
- Fig. 3: in einer Schnittansicht einen vergrößerten Bereich der Tränkeschale der Kleintiertränke von Fig. 1.

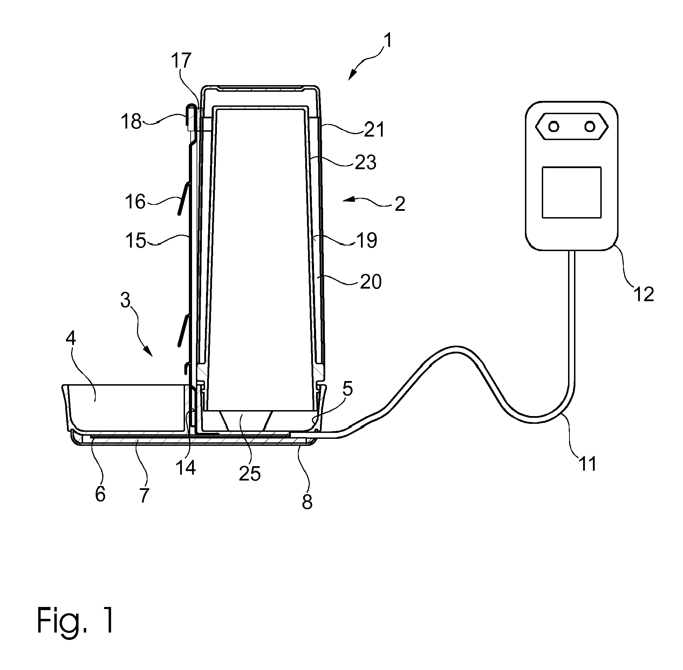

In Figur 1 ist in einer Schnittansicht ein Ausführungsbeispiel einer Kleintiertränke 1 dargestellt. Diese weist einen Flüssigkeitsbehälter 2 sowie eine Tränkeschale 3 auf. Der Flüssigkeitsbehälter 2 ist lösbar mit der Tränkeschale 3 verbunden und lässt sich somit im demontierten Zustand über eine Öffnung 25 bspw. mit Trinkwasser für die zu versorgenden Kleintiere befüllen.

Im montierten, in Fig. 1 dargestellten Betriebszustand ist der Flüssigkeitsbehälter 2 mit seiner Öffnung 25 in einem Aufnahmeabschnitt 5 der Tränkeschale 3 angeordnet. Die Anordnung des Flüssigkeitsbehälters 2 in dem Aufnahmeabschnitt 5 ist dabei derart, dass aus der Öffnung 25 austretendes Trinkwasser aus dem Aufnahmeabschnitt 5 in einen benachbart zu diesem angeordneten, mit dem Aufnahmeabschnitt 5 verbundenen, Entnahmebereich 4 der Tränkeschale 3 gelangt. Im Betriebszustand der Kleintiertränke 1 steht somit der Flüssigkeitsbehälter 2 kopfüber, d.h. mit seiner Öffnung 25 der Tränkeschale 3 zugewandt in dem Aufnahmeabschnitt 5 und füllt somit den Flüssigkeitsstand selbsttätig auf. Sollte der Flüssigkeitspegel unter den Rand des Flüssigkeitsbehälters 2 sinken, strömt Luft in den Flüssigkeitsbehälter 2 nach, sodass dann Flüssigkeit aus dem Flüssigkeitsbehälter 2 austritt und den Wasserpegel auf ein Niveau über den Rand des Flüssigkeitsbehälters 2 hebt. Der Aufnahmeabschnitt 5 und der Entnahmebereich 4 sind dabei derart mit einander verbunden, dass im Aufnahmeabschnitt 5 aus dem Flüssigkeitsbehälter 2 austretende Flüssigkeit in den Entnahmebereich 4 gelangt.

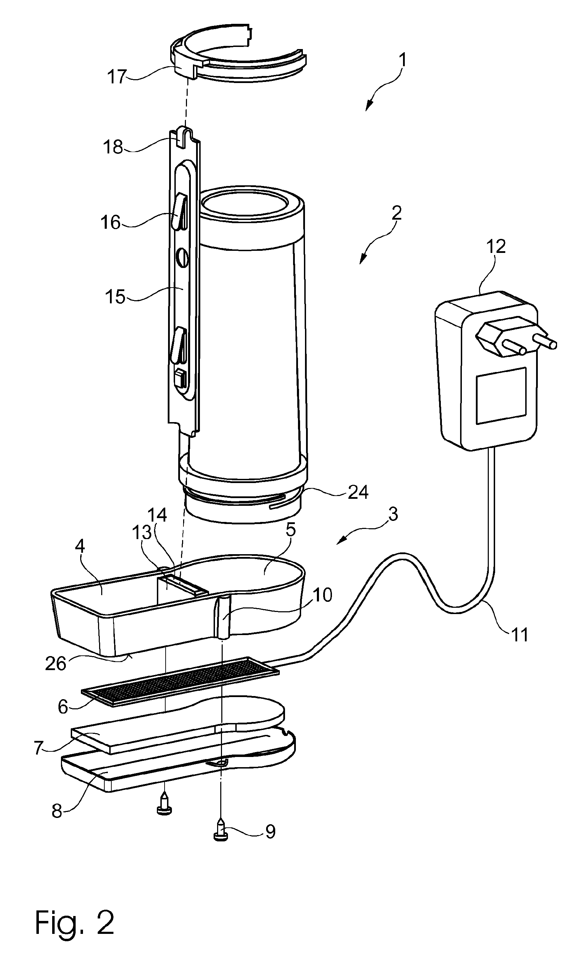

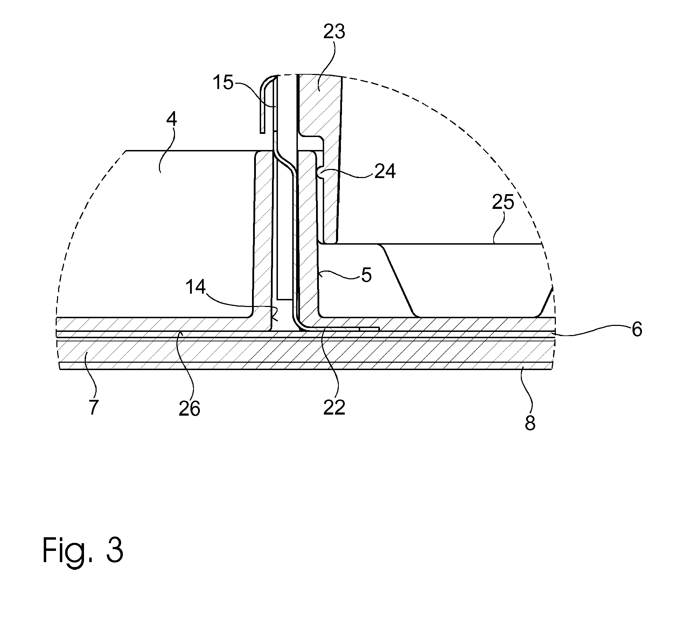

Zur Lagesicherung des Flüssigkeitsbehälters 2 an der Tränkeschale 3 dient ein Halter 15, welcher durch einen langgestreckten, flachen Metallkörper gebildet ist. Der Halter 15 erstreckt sich im Bereich der Tränkeschale 3 durch eine Öffnung 14 in einem den Entnahmebereich 4 von dem Aufnahmeabschnitt 5 partiell abgrenzenden Haltesteg 13. Der Halter 15 ist dabei mit seinem der Tränkeschale 3 zugewandten Ende 22 umgebogen, sodass ein Endbereich des Halters 5 an einer Unterseite 26 der Tränkeschale 3 anliegt und an dieser festgelegt ist. Zur ortsfesten Anordnung des Flüssigkeitsbehälters 2 weist der Halter 15 an seinem der Tränkeschale 3 gegenüberliegenden Ende ein als offener Ring ausgebildetes Arretierungselement 17 auf, welches an einem Haken 18 des Halters 15 fixiert ist. Das Arretierungselement 17 erlaubt die lösbare Anordnung des Flüssigkeitsbehälters 2 an dem Halter 15, wodurch die Position des Flüssigkeitsbehälters 2 an der Tränkeschale 3 gesichert ist (vgl. Fig. 2 und 3).

Um zu gewährleisten, dass bei sinkendem Flüssigkeitsspiegel Luft in das Innere des Flüssigkeitsbehälters 2 nachströmt, weist der Flüssigkeitsbehälter 2 im Bereich des Aufnahmeabschnitts 5 ein partiell umlaufendes Gewinde 24 auf, welches eine Mantelfläche 19 des Flüssigkeitsbehälters 2 im Bereich der Öffnung 25 des Flüssigkeitsbehälters 2 von der Innenwand der Aufnahmeöffnung 5 beabstandet, sodass zuverlässig bei einem Absinken des Flüssigkeitspegels in der Tränkeschale 3 Luft nachströmen kann.

Zur Lagesicherung der Kleintiertränke 1 an einem hier nicht dargestellten Gitter eines Stalls oder Geheges, weist der Halter 15 ferner Laschen 16 auf, welche einstückig aus dem bspw. aus Flachstahl gebildeten Halter 15 ausgeformt sind. Über die Laschen 16 lässt sich die Kleintiertränke 1 an bspw. waagerecht verlaufenden Gitterstäben in besonders einfacher Weise anordnen, wobei dann der Flüssigkeitsbehälter 2 außerhalb des Geheges angeordnet ist und der Entnahmebereich 4 in den Stall hineinragt. Um den Flüssigkeitsbehälter 2 aufzufüllen, muss der Anwender diesen lediglich von der Tränkeschale 3 entfernen und auffüllen. Die übrigen Bauteile der Kleintiertränke 1 können grundsätzlich am Stall verbleiben. Beim anschließenden Umstülpen des Flüssigkeitsbehälters 2 sollte jedoch vorher die Tränkeschale 3 auf die Öffnung 25 des Flüssigkeitsbehälters 2 gesteckt und dann gemeinsam umgedreht werden, um so ein Verschütten der Flüssigkeit zu verhindern.

Um auch bei Temperaturen unterhalb des Gefrierpunktes zu gewährleisten, dass in dem Flüssigkeitsbehälter 2 sowie in der Tränkeschale 3 angeordnete Flüssigkeit nicht gefriert, ist an der Unterseite 26 der Tränkeschale 3 ein elektrisch betriebenes Heizelement 6 angeordnet. Das Heizelement 6 ist als starrer Metallkörper ausgebildet, der über ein Kabel 11 mit einer Steckeinheit 12 verbunden ist. Über das flächig mit der Unterseite 26 verbundene Heizelement 6 wird eine Wärmeübertragung gewährleistet, die besonders zuverlässig verhindert, dass es zu einem Gefrieren der Flüssigkeit in der Tränkeschale 3 oder dem Flüssigkeitsbehälter 2 kommt. Eine Frostfreiheit kann dabei bis zu Temperaturen von -25°C gewährleistet werden.

Zur Verbesserung der Wirkung sowie zur Energiereduzierung ist unterhalb des Heizelements 6 ein Isolationselement 7 in Form einer isolierenden Styroporschicht angeordnet, die eine Wärmeableitung verhindert. Zur Lagesicherung der Isolationsschicht 7 an der Tränkeschale 3 dient eine Abdeckung 8, welche über in Schrauböffnungen 10 an der Tränkeschale 3 einschraubbare Schrauben 9 an der Tränkeschale 3 befestigt ist.

Der Flüssigkeitsbehälter 2 weist einen zylindrischen Behältermantel 23 auf, der die stirnseitige Öffnung 25 aufweist. Zur Reduzierung des Wärmeverlustes über die Mantelfläche 19 weist der Flüssigkeitsbehälter 2 ferner eine den Behältermantel 23 umgebende Isolierung 20 auf, die im vorliegenden Ausführungsbeispiel durch eine Luftschicht gebildet und durch ein Behältergehäuse 21 gegenüber der Umgebung abgegrenzt ist. Die Dicke der Isolierung 20 nimmt dabei in Richtung des geschlossenen Endes des Flüssigkeitsbehälters 2 zu, sodass bei geringem Materialeinsatz gewährleistet werden kann, dass auch bei besonders niedrigen Temperaturen Frostfreiheit besteht.

### Bezugszeichenliste

- 1: Kleintiertränke
- 2: Flüssigkeitsbehälter
- 3: Tränkeschale
- 4: Entnahmebereich
- 5: Aufnahmeabschnitt
- 6: Heizmittel
- 7: Isolationselement
- 8: Abdeckung
- 9: Schrauben
- 10: Schrauböffnung
- 11: Kabel
- 12: Steckeinheit
- 13: Haltesteg
- 14: Öffnung
- 15: Halter
- 16: Befestigungsmittel / Laschen
- 17: Arretierungsmittel
- 18: Haken
- 19: Mantelfläche
- 20: Isolierung
- 21: Behältergehäuse
- 22: Endabschnitt umgebogen
- 23: Behältermantel
- 24: Gewinde
- 25: Öffnung
- 26: Unterseite

## Patentansprüche

1. Kleintiertränke mit
- einem eine Öffnung (25) aufweisenden Flüssigkeitsbehälter (2) und
- einer Tränkeschale (3) mit
- einem Aufnahmeabschnitt (5) zur öffnungsseitigen Anordnung des Flüssigkeitsbehälters (2) an der Tränkeschale (3) sowie
- einem mit dem Aufnahmeabschnitt (5) verbundenen, für Kleintiere zugänglichen Entnahmebereich (4),
**dadurch gekennzeichnet, dass**
im Bodenbereich der Tränkeschale (3) ein Heizmittel (6) zum Beheizen der Tränkeschale (3) angeordnet ist.

2. Kleintiertränke nach Anspruch 1, **dadurch gekennzeichnet, dass** das Heizmittel (6), insbesondere ein elektrisches Heizelement (6), an einer Unterseite (26) der Tränkeschale (3) angeordnet ist.

3. Kleintiertränke nach Anspruch 1 oder 2, **dadurch gekennzeichnet,**
**dass** das Heizmittel (6) an seiner dem Entnahmebereich (4) und dem Aufnahmeabschnitt (5) abgewandten Seite durch ein Isolationselement (7) bedeckt ist.

4. Kleintiertränke nach einem der vorhergehenden Ansprüche, **dadurch gekennzeichnet, dass** die Tränkeschale (3) ein Befestigungselement zur lagesicheren Anordnung eines Halters (15) des Flüssigkeitsbehälters (2) an der Tränkeschale (3), insbesondere einen im Bereich zwischen dem Aufnahmeabschnitt (5) und dem Entnahmebereich (4) angeordneten Haltesteg (10), aufweist.

5. Kleintiertränke nach einem der vorhergehenden Ansprüche, **dadurch gekennzeichnet, dass** das Befestigungselement, insbesondere der Haltesteg (10) ein thermisch leitend mit dem Heizmittel (6) verbundenes Wärmeelement (22) aufweist.

6. Kleintiertränke nach einem der vorhergehenden Ansprüche, **dadurch gekennzeichnet, dass** das Wärmeelement (22) durch einen Abschnitt des Halters (15) gebildet ist.

7. Kleintiertränke nach einem der vorhergehenden Ansprüche, **dadurch gekennzeichnet, dass** der Halter (15) durch eine Öffnung (14) des Haltestegs (13) gesteckt und im Bereich der Unterseite (26) befestigt ist, wobei der Halter vorzugsweise durch einen flachen Metallkörper (15) gebildet ist, der im Bereich der Unterseite (26) umgebogen ist.

8. Kleintiertränke nach einem der vorhergehenden Ansprüche, **dadurch gekennzeichnet, dass** der Halter (15) Befestigungsmittel, insbesondere Laschen (16) zur Befestigung der Kleintiertränke (1) an einem Gitter und/oder ein Arretierungselement (17) zur Befestigung des Flüssigkeitsbehälters (2) an dem Halter (15) aufweist.

9. Kleintiertränke nach einem der vorhergehenden Ansprüche, **gekennzeichnet durch** eine die Mantelfläche (19) des Flüssigkeitsbehälters (2) und/oder die der Öffnung (25) gegenüberliegende Stirnseite bedeckende Isolierung (20).

10. Kleintiertränke nach einem der vorhergehenden Ansprüche, **dadurch gekennzeichnet, dass** die Dicke der Isolierung (20) ausgehend von der Öffnung (25) des Flüssigkeitsbehälters (2) in Richtung der gegenüberliegende Stirnseite zunimmt.

11. Kleintiertränke nach einem der vorhergehenden Ansprüche, **dadurch gekennzeichnet, dass** der Aufnahmeabschnitt (5) und der Flüssigkeitsbehälter (2) derart ausgebildet sind, dass der Flüssigkeitsbehälter (2) in den Aufnahmeabschnitt (5) einschraubbar ist.
